## Europäisches Patentamt
## European Patent Office
## Office européen des brevets

(19)

(11) Veröffentlichungsnummer : **0 011 605**
**B1**

(12)

# EUROPÄISCHE PATENTSCHRIFT

(45) Veröffentlichungstag der Patentschrift :
24.11.82

(21) Anmeldenummer : 79810149.9

(22) Anmeldetag : 09.11.79

(51) Int. Cl.³ : **F 16 C 17/03**, F 16 C 33/10

(54) **Kippsegment-Radiallager für hochbelastete, schnellaufende Wellen.**

(30) Priorität : 10.11.78 CH 11586/78

(43) Veröffentlichungstag der Anmeldung :
28.05.80 (Patentblatt 80/11)

(45) Bekanntmachung des Hinweises auf die Patenterteilung : 24.11.82 Patentblatt 82/47

(84) Benannte Vertragsstaaten :
**BE CH DE FR GB IT NL SE**

(56) Entgegenhaltungen :
**CH A 423 370**
**DE A 1 525 113**
**DE A 1 625 893**
**DE A 2 027 036**
**DE A 2 154 217**
**DE A 2 354 312**
**DE C 436 504**
**DE C 738 541**
**FR A 942 629**
**US A 3 893 737**
**US A 4 077 682**

BROWN BOVERI MITTEILUNGEN, Band 64, Juni
1977, Baden Z. VARGA « Kippsegment-Radiallager 900 mm für Dampfturbogruppen : Eigenschaften und Erprobung » Seiten 309 bis 320

(73) Patentinhaber : **Maag-Zahnräder und -Maschinen
Aktiengesellschaft
Hardstrasse 219
CH-8023 Zürich (CH)**

(72) Erfinder : **Sigg, Hans
Rebbergstrasse 13
CH-8968 Mutschellen (CH)**

## Kippsegment-Radiallager für hochbelastete, schnellaufende Wellen

Die Erfindung betrifft ein Kippsegment-Radiallager für hochbelastete, schnellaufende Wellen, insbesondere von Turbogruppen und -getrieben, mit mindestens einem in Lastrichtung eines Lagergehäuses angeordneten, allseits kippbaren Tragsegment und mindestens zwei in Gegenlastrichtung des Lagergehäuses angeordneten, allseits kippbaren Führungssegmenten, deren Breite etwa 0,8 bis 1,0 mal so gross wie der Durchmesser der Welle ist, bei dem in Zwischenräumen zwischen je zwei Segmenten Schmiermittelzuführungen vorgesehen sind.

Kippsegment-Radiallager der hier interessierenden Art sind vorallem für Wellen mit einer Umfangsgeschwindigkeit von 70 m/sec und mehr am äussersten Lagerzapfendurchmesser vorgesehen. Unter Breite der Segmente ist deren Ausdehnung parallel zur Drehachse der Welle zu verstehen. Der Durchmesser der Welle innerhalb des Lagers wird auch als Lagerzapfendurchmesser bezeichnet.

Solche Lager sind z.B. aus der DE-A-21 54 217 und der Zeitschrift « Brown Boveri-Mitteilungen » Nr. 6-77 S. 309-320 bekannt ; sie sind aus dem Bestreben entstanden, Lager zu entwickeln, die hohen spezifischen Belastungen standhalten und möglichst geringe Verlustleistung haben. Es ist bekannt, dass die Lagerverluste bei grossen Turbogruppen üblicherweise in der Grössenordnung von 0,5 % der Maschinenleistung liegen und sich selbst bei besonders vorteilhafter Lagerkonstruktion kaum unter 0,3 % senken lassen ; damit können bei einer 1 300-MW-Maschine immerhin Verluste in der Grössenordnung von 4 000 bis 6 500 kW auftreten. Trotz Kühlung des Schmiermittels in einem ausserhalb des Lagers angeordneten Kühlaggregat führen die Lagerverluste zu einer starken Erwärmung der Segmente, und dadurch sind deren spezifischer Belastbarkeit enge Grenzen gesetzt. Für stark belastete Wellen, beispielsweise Wellen von Turbinenrotoren mit einer Masse von 100 t und mehr, sind deshalb Lagerzapfendurchmesser bis zu 900 mm als erforderlich angesehen worden. Je grösser aber der Lagerzapfendurchmesser ist, desto grösser ist bei gegebener Drehzahl auch die Umfangsgeschwindigkeit, und diese wiederum ist entscheidend für die Erwärmung des Schmiermittels in den Lagerspalten verantwortlich.

Der Erfindung liegt deshalb die Aufgabe zugrunde, Kippsegment-Radiallager der eingangs beschriebenen Gattung derart zu gestalten, dass der Lagerzapfendurchmesser geringer gehalten werden kann, als dies bei bekannten gattungsgemässen Lagern bei gleicher Belastung und Drehzahl möglich ist.

Die Aufgabe ist erfindungsgemäss dadurch gelöst, dass die Breite des Tragsegments 1,2 bis 2,2 mal so gross wie der Durchmesser der Welle ist, und das Tragsegment in seiner Mitte eine sich in Umfangsrichtung erstreckende Schmiermittelabflussnut aufweist und dass die Schmiermittelzuführung über auf die Welle gerichtete Düsen erfolgt, welche auf die Welle gerichtete, freie Schmiermittelstrahlen erzeugen.

Eine solche Gestaltung galt bisher bei Kippsegment-Lagern mit allseitig kippbaren Trag- bzw. Führungssegmenten als unmöglich ; man hat es gerade im Hinblick auf die allseitige Kippbarkeit für unerlässlich gehalten, einerseits das Verhältnis der Breite der Tragsegmente zum Durchmesser der Welle bzw. des Lagerzapfens auf höchstens 1,0 zu begrenzen und andererseits jegliche Unterbrechung in der Lagerfläche des Tragsegments zu vermeiden. Wenn demgegenüber erfindungsgemäss bei dem Tragsegment ein Verhältnis Breite zu Durchmesser von 1,2 bis 2,2 zu 1 vorgesehen ist, dann bedeutet dies, dass bei gegebenem höchstzulässigem Wert der spezifischen Lagerbelastung der Wellen- bzw. Lagerzapfendurchmesser $\sqrt{1,2}$ bis $\sqrt{2,2}$ mal kleiner bemessen und somit die Umfangsgeschwindigkeit bei gegebener Wellendrehzahl im gleichen Verhältnis kleiner gehalten werden kann. Daraus ergibt sich der weitere Vorteil, dass die Reibungsverluste in den Lagerspalten geringer gehalten werden können, was wiederum zur Folge hat, dass sich die Gleitschichten weniger erwärmen und deshalb einer höheren spezifischen Belastung standhalten.

Im übrigen ist es aus der in der Einleitung genannten Druckschrift auch bekannt, den Segmenten über Drucktaschen Oel zur Schmierung zuzuführen. Bei Segment-Radiallagern bzw. Drucklager mit nicht allseitiger Kippbarkeit (DE-A-2 027 036, CH-A-423 370) ist ferner bei derartigen Lagersystemen die Oelzuführung über freie Düsen bekannt. Die allseitige Kippbarkeit der Trag- bzw. Führungssegmente bildete aber ein Hindernis Oelzuführungen dieser Art auch bei den erfindungsgemässen Lagersystemen vorzusehen.

In der weiteren vorteilhaften Ausgestaltung des Kippsegment-Radiallagers ist vorgesehen, die Düsen in je einer ersten und einer zweiten achsparallelen Düsenreihe anzuordnen und jeder Düsenreihe einen Schirm zuzuordnen, der die aus den Düsen austretenden Schmiermittelstrahlen zur Welle hinleitet und sie gegen im Lagergehäuse herumspritzendes Schmiermittel abschirmt. Damit prallen die aus den einzelnen Düsen austretenden Schmiermittelstrahlen zunächst gegen den zugehörigen Schirm und bilden von diesem einen scharf begrenzten flächenhaften Film, der nun als gemeinsamer freier Schmiermittelstrahl auf die Welle gelenkt wird. Der Vorteil dieser Anordnung liegt in der Tatsache, dass die aus den Düsen austretenden Schmiermittelstrahlen wie ein Schälmesser wirken, das den erhitzten Schmiermittelfilm von der Welle schält.

Bei der zuvor erwähnten DE-A-2 027 036 und bei einer weiteren bekannten Ausführung gemäss DE-A-2 354 312 ist hingegen eine mechanische Abstreifkante vorgesehen, über die das Schmiermittel teilweise von der Welle entfernt werden soll. Nachteilig bei einer solchen Anordnung ist, dass eine mechanische Berührung zwischen den Abstreifflächen des Abstreifers und der Welle unter Umständen nicht vermieden werden kann.

Ein Ausführungsbeispiel der Erfindung wird im folgenden anhand schematischer Zeichnungen beschrieben. Es zeigt :

Figur 1 eine Schrägansicht eines aufgeschnittenen erfindungsgemässen Kippsegment-Radiallagers und

Figur 2 einen Querschnitt desselben Lagers.

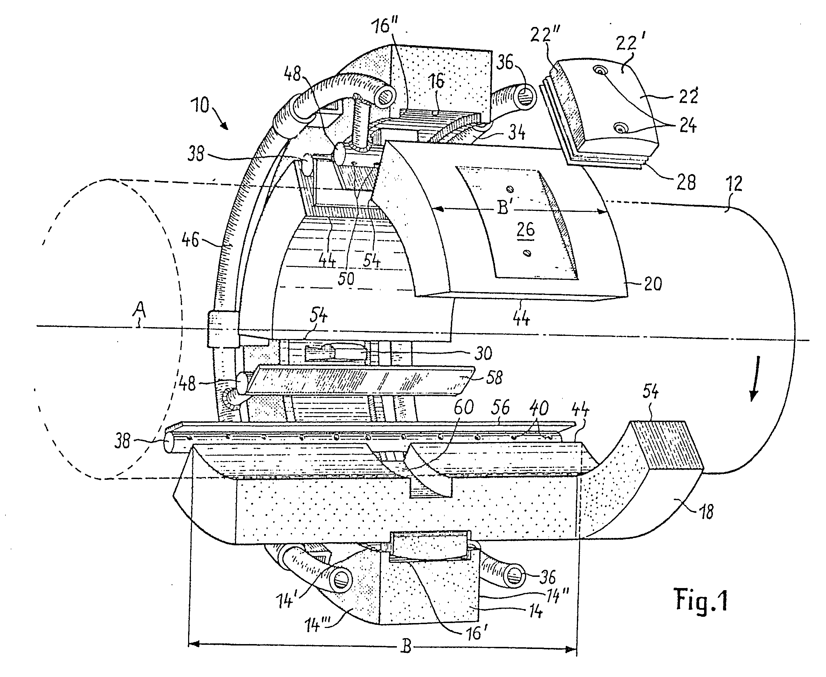

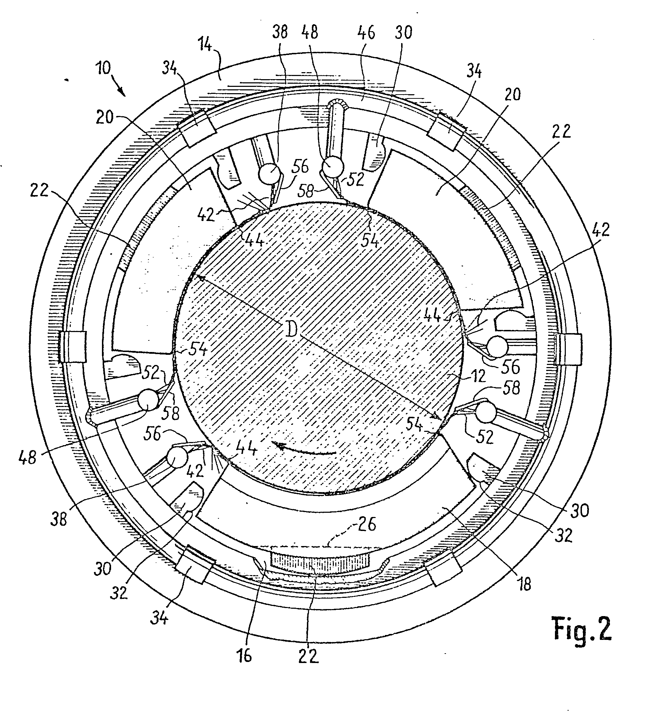

In dem dargestellten Kippsegment-Radiallager 10 ist eine Welle 12 gelagert, die sich in Richtung des Pfeils in Fig. 1 und 2 dreht. Das Lager 10 weist ein Lagergehäuse auf, das sich in seiner Gestaltung und in seiner Aufgabe, den Innenraum des Lagers gegen die Umgebung abzuschliessen, nicht von den Lagergehäusen bekannter Kippsegment-Radiallager zu unterscheiden braucht und deshalb hier nicht im einzelnen beschrieben wird.

Stellvertretend für das gesamte Lagergehäuse ist ein in dieses Gehäuse eingebauter oder Bestandteil des Gehäuses bildender ortsfester Stützring 14 dargestellt, der an seiner radial inneren Seite eine sich nahezu über seine gesamte Breite erstreckende, flache Ringnut 16 aufweist. Am Boden der Ringnut 16 stützten sich ein im unteren Bereich des Stützrings 14 angeordnetes Tragsegment 18 sowie zwei im oberen Bereich des Stützrings angeordnete Führungssegmente 20 über je einen Wälzkörper 22 ab. Jeder Wälzkörper 22 ist mit Schrauben 24 an einer Abflachung 26 des zugehörigen Tragsegments 18 bzw. Führungssegments 20 befestigt. Die Verbindung zwischen dem Tragsegment 18 und dem zugehörigen Wälzkörper 22 ist starr ; zwischen jedem der Führungssegmente 20 und dem zugehörigen Wälzkörper 22 sind Beilagen 28 eingespannt, die ermöglichen, das zugehörige Lagerspiel zu verändern und/oder den Lagermittelpunkt bezüglich der Drehachse A der Welle 12 zu verschieben.

Die Wälzkörper 22 haben eine ballige, beispielsweise kugelförmige Aussenfläche und sind etwas schmaler als die Ringnut 16, so dass sie sich am Boden der Ringnut nach allen Seiten abwälzen können und dadurch Kippbewegungen des zugehörigen Tragsegments 18 bzw. Führungssegments 20 sowohl um eine zur Achse A parallele Achse wie um eine dazu normale Achse ermöglichen. Die zur Achse A normalen Stirnflächen der Wälzkörper 22 sind eben und wirken mit den Seitenwänden der Ringnut 16 derart zusammen, dass Bewegungen der Wälzkörper 22 und somit auch des zugehörigen Trag- bzw. Führungssegments in Richtung der Achse A enge Grenzen gesetzt sind.

Die Bewegungsfreiheit des Tragsegments 18 und der beiden Führungssegmente 20 in Umfangsrichtung der Ringnut 16 ist dadurch eng begrenzt, dass am Stützring 14 radial nach innen ragende Nocken 30 befestigt sind, die je eine ballige Anschlagfläche 32 für das benachbarte Trag- bzw. Führungssegment aufweisen.

Das Tragsegment 18 hat eine parallel zur Achse A gemessene Breite B, die erheblich grösser, im dargestellten Beispiel etwa 1,3 mal so gross ist wie der für das Lager 10 massgebende Durchmesser D der Welle 12. Die beiden Führungssegmente 20 haben dagegen eine erheblich geringere Breite B', die im dargestellten Beispiel nur knapp halbsogross ist, wie die Breite B des Tragsegmentes 18.

An der einen, in Fig. 1 rechten Stirnseite des Stützrings 14 ist mit Rohrschellen 34 eine erste ringförmige Zuflussleitung 36 befestigt, die von einem ausserhalb des Lagergehäuses angeordneten Pump- und Kühlaggregat mit gekühltem Schmiermittel gespeist wird. Das Pump- und Kühlaggregat kann von bekannter Bauart sein und ist deshalb nicht dargestellt ; das gleiche gilt für die durch das Lagergehäuse hindurchführenden Anschlüsse, welche die Zuflussleitung 36 mit diesem Aggregat verbinden sowie für die Anschlüsse, durch die das Schmiermittel aus dem Innenraum des Lagergehäuses zu dem Aggregat zurückfliesst. An die ringförmige Zuflussleitung 36 sind drei Düsenrohre 38 angeschlossen, die sich jeweils im Zwischenraum zwischen dem Tragsegment 18 und jedem der beiden Führungssegmente 20 bzw. im Zwischenraum zwischen den beiden Führungssegmenten 20 und im Abstand von diesen Segmenten parallel zur Achse A erstrecken. Jedes Düsenrohr 38 hat eine Reihe Düsen 40, die so angeordnet sind, dass aus ihnen austretende Schmiermittelstrahlen 42 kurz hinter der Austrittskante 44 des benachbarten Segments 18 bzw. 20 auf die Welle 12 treffen, und zwar in der aus Fig. 2 ersichtlichen Weise schräg entgegen der Drehrichtung der Welle.

In entsprechender Weise ist an der anderen, in Fig. 1 linken Stirnfläche des Stützrings 40 eine zweite ringförmige Zuflussleitung 46 mit drei zur Achse A parallelen Düsenrohren 48 befestigt, deren Düsen 50 so angeordnet sind, dass von ihnen ausgehende Schmiermittelstrahlen 52 kurz vor der Eintrittskante 54 des benachbarten Segments 18 bzw. 20 auf die Welle 12 treffen, und zwar schräg in Drehrichtung der Welle.

An jedem Düsenrohr 38 ist eine Schirm 56 befestigt, der sich parallel zur Achse A und zur Symmetrieebene der aus dem betreffenden Düsenrohr 38 austretenden Schmiermittelstrahlen 42 erstreckt, also ebenfalls entgegen der Drehrichtung der Welle schräggestellt ist, und bis nahe an die Welle heranreicht. In entsprechender Weise ist an den Düsenrohren 48 je ein Schirm 58 befestigt, der in Drehrichtung der Welle 12 schräggestellt ist.

Bei der dargestellten, im Verhältnis zum Durchmesser D grossen Breite B des Tragsegments 18 und angesichts der intensiven Schmierung ist es erforderlich, dass das Tragsegment 18 in seiner Mitte durch eine in Umfangsrichtung verlaufende Schmiermittelabflussnut 60 unterteilt ist, so dass das Tragsegment sich ähnlich verhält wie zwei in axialer Richtung nebeneinander angeordnete, starr miteinander verbundene Tragsegmente, deren Breite kleiner ist als der Durchmesser D.

**Ansprüche**

1. Kippsegment-Radiallager (10) für hochbelastete, schnellaufende Wellen (12), insbesondere von Turbogruppen und -getrieben, mit mindestens einem in Lastrichtung eines Lagergehäuses angeordneten, allseits kippbaren Tragsegment (18) und mindestens zwei in Gegenlastrichtung des Lagergehäuses angeordneten, allseits kippbaren Führungssegmenten (20), deren Breite (B') etwa 0,8 bis 1,0 mal so gross wie der Durchmesser (D) der Welle (12) ist, bei dem in Zwischenräumen zwischen je zwei Segmenten Schmiermittelzuführungen (38, 48) vorgesehen sind, dadurch gekennzeichnet, dass die Breite (B) des Tragsegments (18) 1,2 bis 2,2 mal so gross wie der Durchmesser (D) der Welle (12) ist, und das Tragsegment (18) in seiner Mitte eine sich in Umfangsrichtung erstreckende Schmiermittelabflussnut (60) aufweist, die Schmiermittelzuführung über auf die Welle gerichtete Düsen (40, 50) erfolgt, welche auf die Welle (12) gerichtete, freie Schmiermittelstrahlen (42, 52) erzeugen.

2. Kippsegment-Radiallager nach Anspruch 1, dadurch gekennzeichnet, dass die Düsen (40, 50) in je einer ersten und zweiten achsparallelen Düsen-Reihe (38, 48) angeordnet sind, die erste achsparallele Düsen-Reihe (38) von Düsen (40) kurz hinter der Austrittskante (44) des vorangehenden Segments entgegen der Drehrichtung schräg auf die Welle (12) gerichtet ist, die zweite achsparallele Düsen-Reihe (48) von Düsen (50) kurz vor der Eintrittskante (54) des folgenden Segments in Drehrichtung schräg auf die Welle (12) gerichtet ist.

3. Kippsegment-Radiallager nach Anspruch 2, dadurch gekennzeichnet, dass die achsparallelen Düsen-Reihen (38, 48) in Form von Düsenrohren ausgebildet sind, den Düsen-Reihen (38, 48) je ein Schirm (56 bzw. 58) zugeordnet ist, der die aus den Düsen (40 bzw. 50) austretenden Schmiermittelstrahlen zur Welle (12) hinleitet und sie gegen im Lagergehäuse herumspritzendes Schmiermittel abschirmt.

4. Kippsegment-Radiallager nach den Ansprüchen 2 oder 3, dadurch gekennzeichnet, dass die Düsen (40) der ersten Düsen-Reihe (38) an eine erste Zuflussleitung (36), die Düsen (50) der zweiten Düsen-Reihe (48) an eine davon getrennte zweite Zuflussleitung (46) angeschlossen sind.

**Claims**

1. A tilting-segment radial bearing (10) for heavily loaded, high-speed shafts (12), particularly of turbine sets and turbine drive units, having at least one supporting segment (18) which is tiltable all round and disposed in the load direction of a bearing housing and at least two guide segments (20) which are tiltable all round and are disposed counter to the load direction of the bearing housing and the width of which is about 0.8 to 1.0 times as great as the diameter of the shaft (12), wherein lubricant supply lines (38) are provided in gaps between each two segments, characterised in that the width (B) of the supporting segment (18) is 1.2 to 2.2 times as great as the diameter (D) of the shaft (12), and the supporting segment (18) comprises, in its middle, a lubricant outlet groove (60) extending in the peripheral direction, the supply of lubricant is effected via nozzles (40, 50) which are directed towards the shaft and which produce free jets of lubricant (42, 52) directed towards the shaft (12).

2. A tilting-segment radial bearing as claimed in claim 1, characterised in that the nozzles (40, 50) are each disposed in a first and second row of parallel axis nozzles (38, 48), the first parallel axis row (38) of nozzles (40) is directed obliquely onto the shaft (12) counter to the direction of rotation, shortly behind the trailing edge (44) of the preceding segment, the second parallel axis row (48) of nozzles (50) is directed obliquely onto the shaft (12) in the direction of rotation, shortly before the leading edge (54) of the following segment.

3. A tilting-segment radial bearing as claimed in claim 2, characterised in that the parallel axis rows of nozzles (38, 48) are constructed in the form of nozzle tubes, associated with each of the rows of nozzles (38, 48) is a shield (56 or 58) which guides the jets of lubricant emerging from the nozzles (40 or 50) to the shaft (12) and shields them from lubricant splashing around in the bearing housing.

4. A tilting-segment radial bearing as claimed in claims 2 or 3, characterised in that the nozzles (40) of the first row (38) of nozzles are connected to a first feed pipe (36), the nozzles (50) of the second row (48) of nozzles are connected to a second feed pipe (46) separated therefrom.

**Revendications**

1. Palier radial à segments oscillants (10) pour arbres (12) fortement chargés et tournant à grande vitesse, notamment pour turbomachines et pour turbotransmissions, comprenant au moins un segment porteur (18) monté oscillant dans tous les sens dans la direction de la charge et au moins deux segments de guidage (20) oscillants dans tous les sens et disposés dans la direction inverse de la charge dans le corps de palier, segments dont la largeur est d'environ 0,8 à 1,0 fois le diamètre de l'arbre (12), ce palier présentant en outre dans les intervalles entre deux segments des dispositifs d'alimentation en lubrifiant (38) caractérisé en ce que le segment porteur (18) a une largeur (B) qui est 1,2 à 2,2 fois plus grande que le diamètre (D) de l'arbre (12) et en ce que le segment porteur (18) présente en son milieu une rainure (60) d'écoulement de lubrifiant qui s'étend dans la direction circonférentielle et en ce que l'alimentation en lubrifiant est réalisée par l'intermédiaire de buses (40, 50) orientées vers l'arbre et engendrant des jets libres de lubrifiant dirigés vers l'arbre (12).

2. Palier radial à segments oscillants suivant la revendication 1, caractérisé en ce que les buses (40, 50) sont disposées respectivement en des première et seconde rampes (38, 48) parallèles à l'axe, la première rampe (38) de buses (40) étant placée à très petite distance en arrière de l'arête de sortie (44) du segment précédent et orientée obliquement vers l'arbre (12), en sens inverse de la rotation de celui-ci, tandis que la seconde rampe (48) de buses (50) est placée à très petite distance en avant de l'arête d'entrée (54) du segment suivant et orientée vers l'arbre (12) dans le sens de la rotation.

3. Palier radial à segments oscillants suivant la revendication 2, caractérisé en ce que les rampes (38, 48) de buses parallèles à l'axe sont réalisées sous la forme de tubes à buses, et en ce que chaque rampe (38, 48) de buses est associée à un écran (56, 58) qui guide les jets de lubrifiant sortant des buses (40, 50) en direction de l'arbre (12) et en protégeant cet arbre contre les éclaboussures de lubrifiant à l'intérieur du corps de palier.

4. Palier radial à segments oscillants suivant les revendications 2 ou 3, caractérisé en ce que les buses (40) de la première rampe (38) sont raccordées à une première conduite d'alimentation (36), tandis que les buses (50) de la seconde rampe (48) sont branchées sur une seconde conduite d'alimentation (46) séparée de la première conduite.

Fig.1

Fig.2